# FASCICULE DE BREVET EUROPEEN

(11) **EP 1 681 743 B1**
(45) Date de publication et mention de la délivrance du brevet: **23.01.2008**
(21) Numéro de dépôt: 05300976.7
(22) Date de dépôt: 30.11.2005
(51) Int. Cl.: H01R 4/68

(54) **Agencement de connexion des écrans de câbles supraconducteurs**
Verbindungsanordnung für die Abschirmungen von supraleitenden Kabeln
Connection device for superconductive cable screens

(30) Priorité: 01.12.2004 FR 0452827
(43) Date de publication de la demande: 19.07.2006
(73) Titulaire: Nexans, 75008 Paris (FR)
(72) Inventeur: Lallouet, Nicolas, 62132, Fiennes (FR); Mirebeau, Pierre, 91140, VILLEBON SUR YVETTE (FR); Schippl, Klaus, 30659, Hannover (DE); Schmidt, Frank, 30855, Langenhagen (DE)
(74) Mandataire: Lenne, Laurence

(56) Documents cités:
- WO-A-02/29930
- DE-A1- 10 225 935

## Description

La présente invention concerne un agencement de connexion des écrans de câbles supraconducteurs à diélectrique froid, notamment la connexion entre les écrans de différents câbles de phase supraconducteurs.

Le transport du courant électrique à l'aide de câbles supraconducteurs haute tension permet de transporter des courants électriques de fortes intensités avec des sections de câbles beaucoup plus faibles qu'avec des câbles classiques composés de conducteurs électriques résistifs tout en limitant les pertes électriques le long du câble, notamment les pertes par effet Joule puisque ce phénomène est extrêmement faible en supraconductivité. Afin de diminuer les pertes, le courant électrique est transporté sous forme de courant alternatif polyphasé, habituellement triphasé, un câble de phase étant dédié à chacune des phases (pour du courant triphasé, on a donc trois câbles de phase séparés).

Un câble de phase supraconducteur dit « à diélectrique froid » est constitué d'un conducteur électrique central constitué au moins d'une partie supraconductrice (désigné ci-après par "supraconducteur central"), d'une isolation électrique entourant ledit supraconducteur central (désigné ci-après par « diélectrique »), d'un écran entourant ledit diélectrique et pouvant être constitué pour tout ou partie de supraconducteurs et d'une enceinte cryogénique ou cryostat entourant ledit écran. Ledit cryostat est constitué généralement de deux enveloppes concentriques isolées thermiquement entre elles (par un niveau de vide de 10⁻⁵ mbars par exemple). Un fluide cryogénique contenu à l'intérieur de l'enveloppe interne du cryostat refroidit le supraconducteur central à travers le diélectrique (d'où la désignation de "diélectrique froid") jusqu'à atteindre la température pour laquelle le supraconducteur est dans un état de supraconductivité (cette température est par exemple de l'ordre de -196 °C pour des supraconducteurs dit « haute température »).

Pour des raisons de sécurité, la présence d'un écran dans un câble est obligatoire lorsque la tension appliquée au câble atteint une certaine valeur (par exemple 1 kV en France). Ces écrans sont reliés à un potentiel de masse, généralement à la terre. On évite ainsi le risque d'électrocution en cas de contact accidentel du câble, par exemple par une personne creusant le sol dans lequel se trouve un câble électrique.

Dans le cas des câbles supraconducteurs à diélectrique froid, des courants d'intensités similaires sont amenés à circuler dans l'écran (notamment si cet écran est constitué pour tout ou partie de supraconducteur) et dans le supraconducteur central. Pour les câbles haute tension, la valeur de ce courant peut être élevée (par exemple, 2.400 Ampères) et il n'est donc pas envisageable de relier l'écran directement à la terre. La solution consiste à relier entre eux les écrans des câbles de phases. Le courant résultant étant la somme vectorielle des courants de phase, le courant résultant a une intensité nulle ou presque nulle et il peut donc être relié à la terre. Pour du courant triphasé, deux câbles sont suffisants pour relier entre eux les écrans des trois phases, un câble résistif (par exemple un câble cuivre) est généralement utilisé pour la connexion à la terre après annulation vectorielle des courants. Cependant, une connexion des écrans entre eux par un câble résistif entraîne des pertes thermiques et électriques par effet Joule et donc une augmentation de la quantité de fluide cryogénique consommée pour refroidir le supraconducteur et une baisse du rendement électrique pour l'installation. De plus, si les pertes thermiques sont trop importantes, l'élévation de température autour de cette liaison résistive peut empêcher un refroidissement efficace par le fluide cryogénique du supraconducteur à proximité. Les parties supraconductrices peuvent alors basculer d'un état de supraconductivité à un état de simple conductivité et aggraver la baisse du rendement électrique de l'installation.

La présente invention résout ce problème technique et, pour ce faire, propose un agencement de connexion des écrans de câbles de phase supraconducteurs comportant chacun un supraconducteur central, un diélectrique et un écran placé à l'intérieur d'un cryostat pouvant contenir un fluide cryogénique. L'agencement est caractérisé en ce qu'il comporte un câble supraconducteur de liaison entre les écrans, ledit câble de liaison comportant un supraconducteur de liaison et une gaine cryogénique entourant ledit supraconducteur de liaison, chacune des deux extrémités du supraconducteur de liaison étant reliée à l'un des écrans par des moyens de connexion électriquement et thermiquement conducteurs.

Selon un mode de réalisation, le supraconducteur de liaison comporte un support électriquement et thermiquement conducteur autour duquel sont enroulés des brins supraconducteurs. Ces brins supraconducteurs peuvent être sous forme de rubans ou de fils (rubans supraconducteur de type Bi₂Sr₂Ca₂Cu₃O par exemple). Lesdits moyens de connexion sont en contact thermique avec ledit fluide cryogénique et sont thermiquement et électriquement connectés audit support, lesdits brins supraconducteurs étant refroidis par conduction thermique le long desdits moyens de connexion et dudit support. Ce dernier est réalisé en un métal électriquement et thermiquement bon conducteur, en cuivre par exemple, et peut se présenter sous la forme de barre massive, de tube, ou de câble métallique (tel qu'un câble de fils de cuivre émaillé par exemple)

De façon avantageuse, ladite gaine cryogénique peut être reliée au cryostat à l'aide d'un raccord du type "raccord Johnston" par exemple, lequel peut assurer une étanchéité entre le contenu de ladite gaine cryogénique et le contenu dudit cryostat.

Lesdits moyens de connexion peuvent être munis de moyens de passage dudit fluide cryogénique entre ledit cryostat et l'intérieur de ladite gaine, ledit supraconducteur de liaison étant alors refroidi, au moins en partie, par contact avec ledit fluide cryogénique.

Lesdits moyens de connexion comportent avantageusement une pièce de connexion reliée d'une part à l'extrémité dudit supraconducteur de liaison et d'autre part audit écran. Cette pièce de connexion peut être reliée audit écran par l'intermédiaire d'une connexion flexible (par exemple par un ensemble de tresses métalliques), ou à l'aide d'une pièce intermédiaire, laquelle peut être, d'une part, reliée audit écran par l'intermédiaire d'un contact électrique glissant (telles que des lamelles multicontacts) et, d'autre part, fixée à ladite pièce de connexion.

Selon une autre forme de réalisation, ledit écran est entouré d'un élément de jonction conducteur, ledit écran et ledit élément de jonction étant électriquement reliés ensemble, ledit écran étant connecté auxdits moyens de connexion par l'intermédiaire dudit élément de jonction. Ladite pièce intermédiaire peut être reliée audit élément de jonction à l'aide d'un contact glissant, constitué par exemple de lamelles métalliques interposées entre ledit élément de jonction et ladite pièce intermédiaire.

Ledit élément de jonction peut être formé par un tube dont la paroi interne est fixée à la paroi externe dudit écran, avantageusement par soudure ou brasure à l'aide d'un alliage à basse température de fusion.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- la figure 1 représente une vue en coupe de deux câbles de phase supraconducteurs et l'agencement de connexion des écrans de ces deux câbles;
- les figures 2, 3, 4 et 5 représentent différents modes de réalisation de la connexion du supraconducteur de liaison à l'écran d'un câble de phase supraconducteur; et
- la figure 6 est une vue en perspective d'une partie du supraconducteur de liaison.

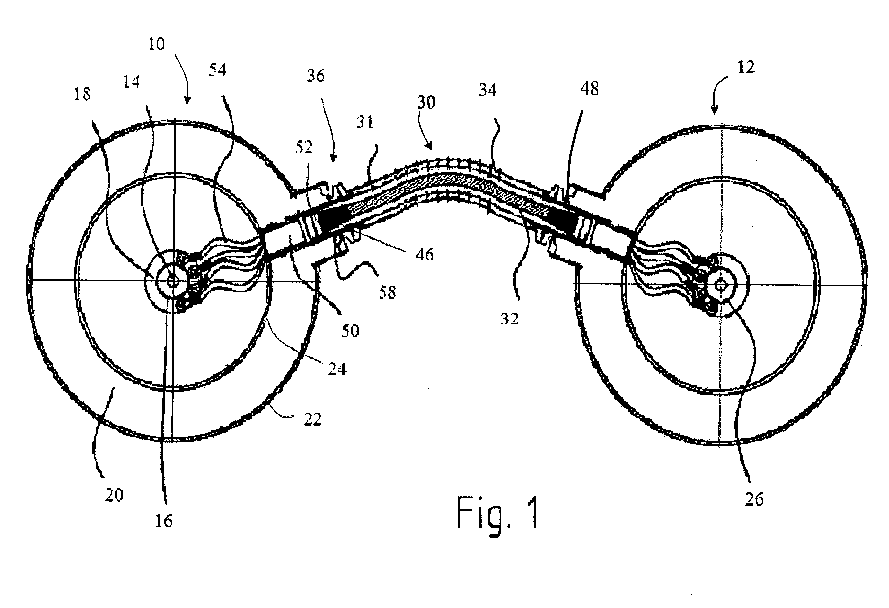

Sur la figure 1, les deux câbles de phase supraconducteurs 10 et 12 sont identiques et comprennent chacun un supraconducteur central 14 entouré d'un diélectrique, lui-même entouré d'un écran 16 constitué de matériaux électriquement et thermiquement conducteur ou supraconducteur par exemple un câblage d'une couche de rubans en cuivre et d'une couche de rubans supraconducteurs. Le diélectrique est constitué d'un matériau isolant qui sera choisi et dimensionné pour résister au champs électrique défini pour le câble supraconducteur et ce afin d'éviter un claquage entre l'écran (au potentiel zéro volt) et le supraconducteur central (à haute tension). Ce diélectrique peut être par exemple constitué de plusieurs couches de papier à base de polypropylène (PPLP).

Un élément de jonction 18 entoure l'écran 16 sur une faible partie de la longueur de l'écran auquel il est électriquement et thermiquement connecté. L'élément de jonction 18 peut prendre la forme d'un tube ou d'un anneau dont la paroi interne est directement soudé ou brasé sur la surface externe de l'écran 16. L'élément de jonction est réalisé en un matériau bon conducteur électrique, en cuivre par exemple. La soudure ou brasure est préférentiellement réalisée avec des alliages à basse température de fusion.

Une enceinte cryogénique ou cryostat 20 de forme annulaire, constituée d'une paroi externe 22 et d'une paroi interne 24, entoure l'élément de jonction. Un fluide cryogénique, de l'azote liquide par exemple, peut circuler à l'intérieur de la paroi interne afin de refroidir le supraconducteur de phase 14. Une isolation thermique est assurée entre la paroi interne (22) et externe (24) (vide de 10⁻⁵ mbars par exemple) afin d'éviter un échauffement et une consommation importante du fluide cryogénique

L'agencement de connexion des écrans 16 et 26 des deux câbles de phase supraconducteurs, respectivement 10 et 12, comporte un câble supraconducteur de liaison 30, ce câble étant constitué d'un supraconducteur de liaison 32, entouré d'une gaine cryogénique 34, de préférence constituée de deux enveloppes concentriques isolées thermiquement entre elles (par du vide par exemple), et de moyens 36 de connexion du supraconducteur de liaison 32 à l'écran 16 ou 26.

Les connexions du câble supraconducteur de liaison 30 aux écrans 16 et 26 étant identiques, seule la connexion de l'écran 16 au câble de liaison 30 sera décrite (partie gauche de la figure 1).

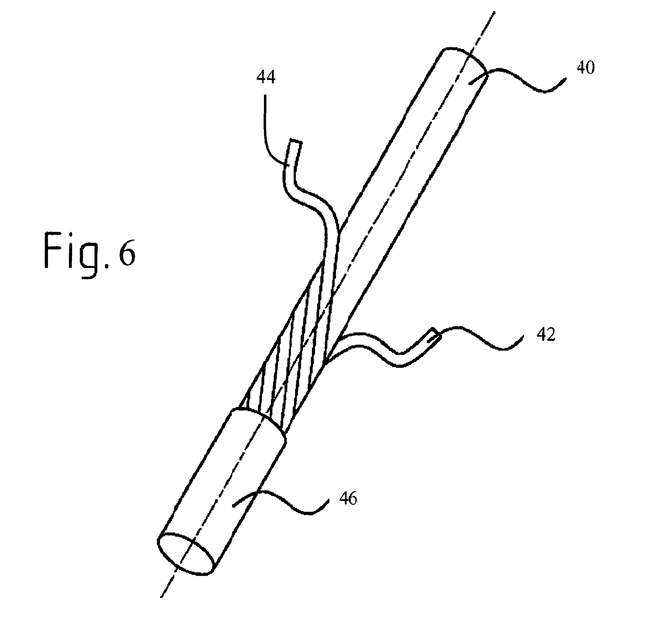

Le supraconducteur 32 est constitué d'un support mécanique 40 (voir figure 6) autour duquel sont enroulées une ou plusieurs couches de brins supraconducteurs 42 et 44 sous forme de rubans ou fils. Une ou plusieurs couches additionnelles 46, en noir de carbone ou en un matériau diélectrique, peuvent éventuellement entourées la ou les couches de rubans supraconducteurs 42 et 44. Le support mécanique 40 est réalisé en un matériau conducteur, en cuivre par exemple, afin d'assurer le passage du courant électrique en cas de transition des rubans 42 et 44 d'un état supraconducteur à un état simplement conducteur. Le support 40 peut être un câble ou un tube rigide ou flexible. Des couches de différentes natures, en noir de carbone ou en ruban d'acier inoxydable ou en papier par exemple, peuvent être insérées entre les couches de rubans supraconducteurs 42 et 44. Ces couches peuvent respectivement assurer un lissage du potentiel sur le diamètre extérieur de la couche de rubans supraconducteurs, assurer une meilleure protection et tenue mécanique aux rubans supraconducteurs, ou assurer une isolation électrique entre le supraconducteur de liaison et la gaine cryogénique 34 sur toute ou partie de sa longueur. Les rubans supraconducteurs 42 et 44 sont soudés ou brasés aux deux extrémités 46 et 48 (figure 1) du support 40.

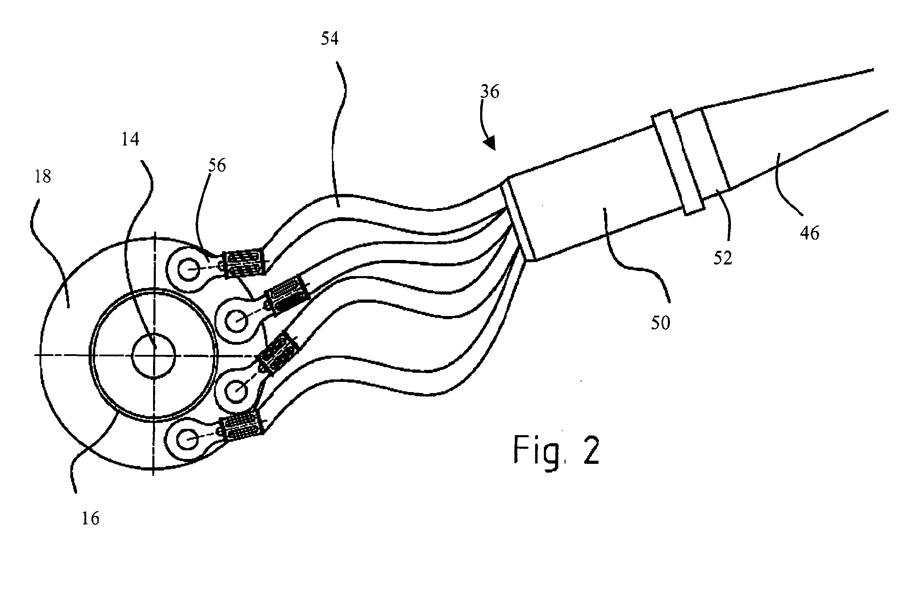

Les moyens de connexion 36 comportent une pièce de connexion 50 (figure 1) fixée à l'extrémité 46 du supraconducteur de liaison 32. Cette pièce de connexion est réalisée dans un bloc de matériau bon conducteur thermiquement et électriquement, en cuivre par exemple. La pièce de connexion 50 est fixée à l'extrémité 46 du supraconducteur de liaison 32 par une soudure ou brasure 52 (figures 1 et 2) à une température compatible avec les rubans supraconducteurs 42 et 44. La soudure ou brasure de la pièce de connexion peut être effectuée indépendamment de la soudure ou brasure des rubans supraconducteurs 42 et 44 aux deux extrémités 46 et 48 du support 40.

Les moyens de connexion 36 comportent également une connexion flexible 54 (figures 1 et 2) reliant électriquement la pièce de connexion 50 à l'élément de jonction 18. La connexion flexible 54 est composée de plusieurs tresses métalliques, d'une part soudées à la pièce de connexion 50 et, d'autre part, fixées mécaniquement et électriquement par des cosses 56 à l'élément de jonction 18. Le nombre de tresses et leurs sections sont choisis en fonction de l'intensité maximale du courant à transporter.

Chacune des deux extrémités de la gaine cryogénique 34 est fixée au cryostat des câbles de phase. Cette fixation doit assurer la continuation de l'isolation thermique entre la gaine cryogénique et le cryostat pour éviter un échauffement du fluide cryogénique. Ce type de fixation peut être réalisée à l'aide d'un raccord 58, avantageusement du type Johnston bien connu de l'homme du métier. Ce type de raccord comportant une partie male et une partie femelle s'emboîtant, la gaine cryogénique 34 pourra par exemple être fixée par soudure à la partie male du raccord Johnston tandis que la partie femelle sera soudée entre la paroi interne 24 et la paroi externe 22 du cryostat du câble de phase. De tels raccords sont par exemple commercialisés par la société NEXANS pour la réalisation de lignes de transfert cryogénique.

La fixation de la pièce de connexion 50 au cryostat 20 peut être réalisée de deux façons différentes, selon le mode de refroidissement choisi pour le supraconducteur de liaison 32.

Selon un premier mode de réalisation, le refroidissement est assuré par conduction thermique le long de la pièce de connexion 50 et du support 40 du supraconducteur de liaison 32. Le fluide cryogénique contenu dans le cryostat 20 ne passe pas dans la gaine cryogénique 34. Il faut donc assurer une étanchéité entre ce cryostat 20 et la gaine 34. Cette étanchéité peut être réalisée par un bridage de la pièce de connexion 50 sur la paroi interne 24 du cryostat 20 ou par bridage entre les parties male et femelle du raccord 58.

Selon un deuxième mode de réalisation, le refroidissement du supraconducteur de liaison 32 est assuré par un contact direct avec le fluide cryogénique du cryostat 20. Dans ce cas, la pièce de connexion 50 n'a pas besoin d'être fixée de façon étanche et des passages peuvent être pratiqués dans cette pièce de connexion afin de permettre le passage du fluide cryogénique du cryostat 20 vers l'espace 31, entre la gaine cryogénique 34 et le supraconducteur de liaison 32.

On peut remarquer que selon ce deuxième mode de réalisation, le refroidissement du supraconducteur de liaison 32 est en partie réalisé également par conduction thermique. Ceci permet, notamment, si le flux de fluide cryogénique est limité à travers la pièce de connexion 50, de compléter le refroidissement direct par convection du fluide cryogénique sur le supraconducteur de liaison par une conduction thermique le long du support 40 et des moyens de connexion 36.

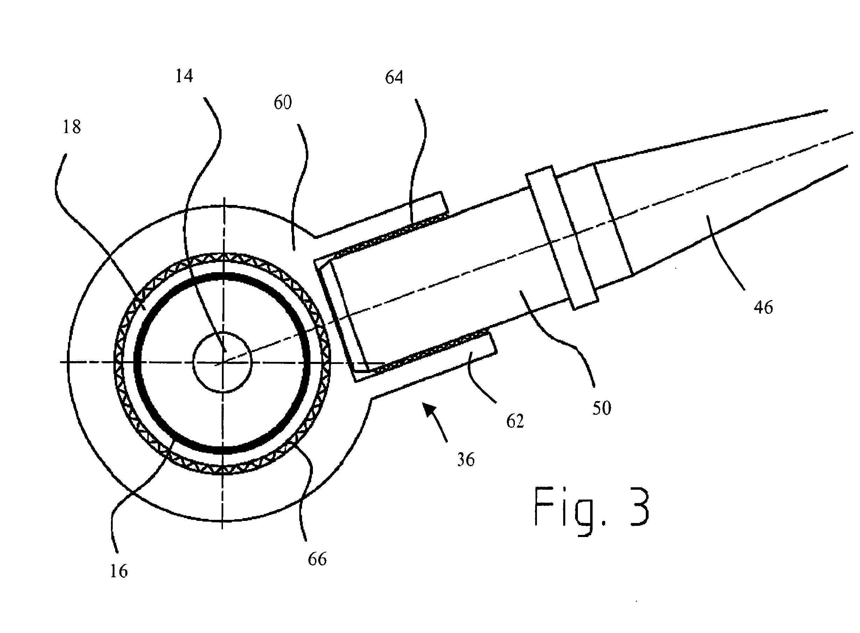

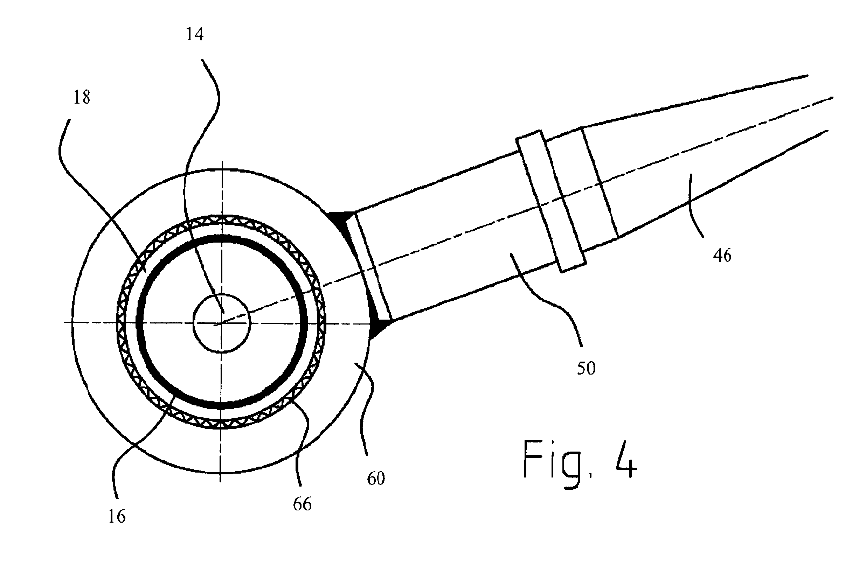

Les modes de connexion de la pièce de connexion 50 à l'élément de jonction 18 décrits en regard des figures 1, 2, 3 et 4 permettent de gérer le retrait thermique du câble ou son déplacement. Sur les figures 3 et 4, le retrait thermique du câble est géré au niveau de la connexion par les lamelles de contact 66 (multicontact) placées entre les deux pièces concentriques 18 et 60, ces dernières glissant l'une dans l'autre et le contact électrique étant maintenu par les lamelles qui sont toujours en contact avec ces deux pièces 18 et 60. Sur les figures 1 et 2, il n'y a pas de lamelles de contact, mais la connexion électrique lors du retrait thermique est maintenue grâce au mouvement des tresses 54. L'ensemble des pièces 16, 18 et 14 bougent suivant l'axe du câble mais les tresses 54, qui ont une surlongueur, permettent ce mouvement et la connexion électrique est maintenue. Les modes de réalisation représentés sur les figures 1, 2, 3 et 4, qui permettent de gérer le retrait thermique du câble ou son déplacement, sont particulièrement bien adaptés au cas où la partie du supraconducteur de phase 10 constituée du supraconducteur central 14, du diélectrique et de l'écran 16 est susceptible de bouger (notamment lors de l'étape de mise en froid par injection du fluide cryogénique, à cause de la contraction d'origine thermique engendrée sur toute la longueur de ces trois éléments mécaniquement lié entre eux).

Sur la figure 3, les moyens de connexion 36 comportent la pièce de connexion 50 et une pièce intermédiaire 60 ayant la forme d'un anneau ou d'un cylindre muni d'un raccord 62 de forme tubulaire. La pièce de connexion 50 pénètre dans le raccord 62, établissant ainsi la liaison électrique entre la pièce de connexion 50 et la pièce intermédiaire 60. De façon avantageuse, le raccord 62 est muni d'un contact électrique glissant 64 composé d'un assemblage à lamelles de contact électriquement conductrices, ce qui permet de connecter et déconnecter aisément la pièce de connexion 50 à la pièce intermédiaire 60. Ce type de lamelles de contact, par exemple commercialisé par la société MULTICONTACT, est bien connu de l'homme du métier. Un autre contact électrique glissant 66, avantageusement à lamelles de contact métalliques, est inséré entre la pièce intermédiaire 60 et l'élément de jonction 18. L'élément de jonction 18 étant fixé (par brasure ou soudure) à l'écran 16, l'ensemble formé par cet élément 18, l'écran 16 et le supraconducteur de phase 14 peut coulisser dans la pièce intermédiaire 60. Le contact glissant 66 assure ainsi la conservation de la connexion électrique en cas de mouvement de la partie du supraconducteur de phase 10 constituée du supraconducteur central 14, du diélectrique et de l'écran 16. Les lamelles métalliques du contact glissant 66 sont de préférence solidaires de la pièce intermédiaire 60. Les longueurs de l'élément de jonction 18 et de la pièce intermédiaire 60 sont de préférence identiques et choisies en fonction du retrait thermique attendu.

Le mode de réalisation représenté sur la figure 4 est plus simple que celui de la figure 3. En effet, la pièce intermédiaire 60 ne comporte plus de raccord 62, mais est directement fixée, par soudure ou brasure par exemple, sur la pièce de connexion 50. La pièce intermédiaire 60 et la pièce de connexion 50 pourrait ne former qu'une seule pièce usinée.

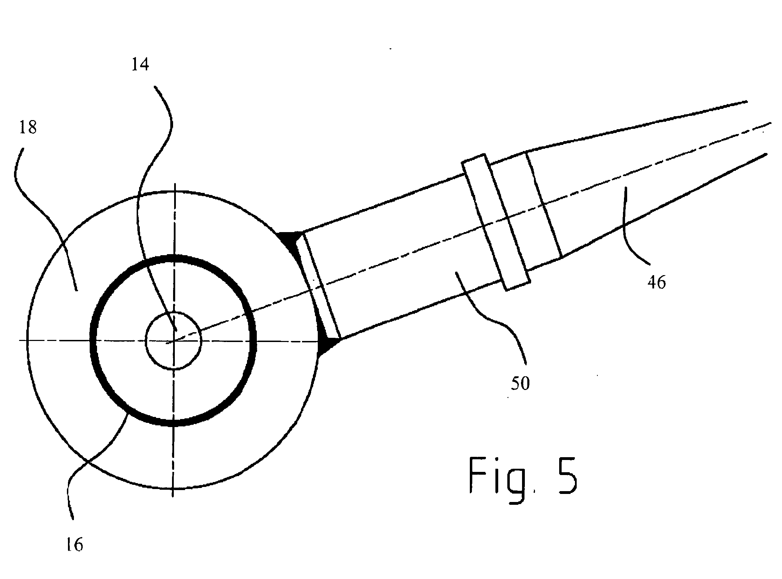

Lorsque le supraconducteur de phase 14 n'est pas susceptible de bouger, ou que le retrait thermique est faible (par exemple pour une courte longueur de câble de phase supraconducteur), la connexion de la pièce de connexion 50 à l'élément de jonction 18 peut être fixe, comme représentée sur la figure 5. Ainsi, la pièce de connexion 50 est directement fixée, par soudure ou brasure, à l'élément de jonction 18. L'élément de jonction 18 peut être fixé à l'écran 16 par exemple par soudure, brasure ou serrage mécanique. La pièce de connexion 50 et l'élément de jonction 18 peuvent ne former qu'une seule pièce usinée. De façon alternative, cette connexion rigide entre cette pièce 50 et cet élément 18 peut être remplacée par une connexion amovible, à contact glissant par exemple comme dans le mode de réalisation de la figure 3, de façon à permettre un montage et démontage aisés du câble de liaison supraconducteur.

La présente invention, dont plusieurs modes de réalisation viennent d'être décrits, ne se limite pas à connecter entre eux les écrans d'uniquement deux câbles de phase supraconducteurs. Les écrans de toutes les phases peuvent être connectés entre eux en les connectant en série. Par exemple, dans le cas d'un courant triphasé, l'écran de la phase n°1 est connecté à l'écran de la phase n°2, lequel est connecté à l'écran de la phase n°3.

Il est évident que l'invention ne se limite pas aux réalisations décrites et qu'on peut y apporter des variantes d'exécution à la portée de l'homme du métier.

## Revendications

1. Agencement de connexion des écrans (16, 26) de câbles de phase supraconducteurs (10, 12), chaque câble comprenant un supraconducteur central (14), un diélectrique entourant ledit supraconducteur central , un écran (16) entourant ledit diélectrique et un cryostat (20) entourant ledit écran (16), ledit cryostat pouvant contenir un fluide cryogénique, **caractérisé en ce que** ledit agencement comporte un câble supraconducteur de liaison (30) entre lesdits écrans, ledit câble de liaison comprenant un supraconducteur de liaison (32) et une gaine cryogénique (34) entourant ledit supraconducteur de liaison, chacune (46,48) des deux extrémités dudit supraconducteur de liaison (32) étant reliée à l'un (16,26) desdits écrans par des moyens de connexion (36) électriquement et thermiquement conducteurs.

2. Agencement de connexion selon la revendication 1 **caractérisé en ce que** ledit supraconducteur de liaison (32) comporte un support (40) électriquement et thermiquement conducteur autour duquel sont enroulés des brins supraconducteurs (42, 44) et **en ce que** lesdits moyens de connexion (36) sont en contact thermique avec ledit fluide cryogénique et sont thermiquement et électriquement connectés audit support (40), lesdits brins supraconducteurs (42, 44) étant refroidis par conduction thermique le long desdits moyens de connexion (36) et dudit support (40).

3. Agencement de connexion selon la revendication 2 **caractérisé en ce que** ledit support (40) est réalisé en un métal électriquement et thermiquement bon conducteur.

4. Agencement de connexion selon l'une des revendications précédentes **caractérisé en ce que** lesdits moyens de connexion (36) sont munis de moyens de passage dudit fluide cryogénique entre ledit cryostat (20) et l'intérieur (31) de ladite gaine (34), ledit supraconducteur de liaison (32) étant refroidi, au moins en partie, par contact avec ledit fluide cryogénique.

5. Agencement de connexion selon l'une des revendications précédentes **caractérisé en ce que** lesdits moyens de connexion (36) comportent une pièce de connexion (50) reliée d'une part à l'extrémité (46) dudit supraconducteur de liaison (32) et d'autre part audit écran (16).

6. Agencement de connexion selon la revendication 5 **caractérisé en ce que** ladite pièce de connexion (50) est reliée audit écran (16) par l'intermédiaire d'une connexion flexible (54).

7. Agencement de connexion selon la revendication 6 **caractérisé en ce que** ladite connexion flexible est réalisée par un ensemble de tresses métalliques (54).

8. Agencement de connexion selon la revendication 5 **caractérisé en ce que** ladite pièce de connexion (50) est reliée audit écran (16) à l'aide d'une pièce intermédiaire (60).

9. Agencement de connexion selon la revendication 8 **caractérisé en ce que** ladite pièce intermédiaire (60) est reliée audit écran (16) par l'intermédiaire d'un contact électrique glissant (64).

10. Agencement de connexion selon la revendication 9 **caractérisé en ce que** ledit contact glissant (64) est constitué de lamelles métalliques interposées entre ladite pièce de connexion (50) et ladite pièce intermédiaire (62).

11. Agencement de connexion selon la revendication 8 **caractérisé en ce que** ladite pièce intermédiaire (60) est fixée à ladite pièce de connexion (50).

12. Agencement de connexion selon l'une des revendications précédentes **caractérisé en ce que** ledit écran (16) est entouré d'un élément de jonction conducteur (18), ledit écran (16) et ledit élément de jonction (18) étant électriquement reliés ensemble, ledit écran étant connecté auxdits moyens de connexion (36) par l'intermédiaire dudit élément de jonction (18).

13. Agencement de connexion selon les revendications 8 et 12 **caractérisé en ce que** ladite pièce intermédiaire (60) est reliée audit élément de jonction à l'aide d'un contact glissant (66).

14. Agencement de connexion selon la revendication 13 **caractérisé en ce que** ledit contact glissant (66) est constitué de lamelles métalliques interposées entre ledit élément de jonction et ladite pièce intermédiaire.

15. Agencement de connexion selon la revendication 12 **caractérisé en ce que** ledit élément de jonction (18) est fixé par brasure ou soudure à ladite pièce de connexion (50).

16. Agencement de connexion selon l'une des revendications 12 à 15 **caractérisé en ce que** ledit élément de jonction (18) est formé par un tube dont la paroi interne est fixée à la paroi externe dudit écran.

17. Agencement de connexion selon la revendication 16 **caractérisé en ce que** ledit élément de jonction (18) est fixé audit écran (16) par soudure ou brasure à l'aide d'un alliage à basse température de fusion.

18. Agencement de connexion selon l'une des revendications précédentes **caractérisé en ce que** ladite gaine cryogénique (34) est reliée audit cryostat (20) à l'aide d'un raccord étanche (58).

19. Agencement de connexion selon la revendication 18 **caractérisé en ce que** ledit raccord étanche (58) est un raccord du type "Johnston".

## Claims

1. An arrangement for connecting screens (16, 26) of superconducting phase cables (10, 12), each cable comprising a central superconductor (14), a dielectric surrounding said central superconductor, a screen (16) surrounding said dielectric and a cryostat (20) surrounding said screen (16), said cryostat being able to contain a cryogenic fluid, **characterized in that** said arrangement includes a superconducting connecting cable (30) between said screens, said connecting cable comprising a connecting superconductor (32) and a cryogenic cladding (34) surrounding said connecting superconductor, each (46, 48) of the two ends of said connecting superconductor (32) being connected to one (16, 26) of said screens by electrically and thermally conductive connection means (36).

2. The connecting arrangement according to claim 1, **characterized in that** said connecting superconductor (32) includes an electrically and thermally conductive support (40) around which superconducting strands (42, 44) are wound and **in that** said connecting means (36) are in thermal contact with said cryogenic fluid and are thermally and electrically connected to said support (40), said superconducting strands (42, 44) being cooled by thermal conduction along said connecting means (36) and said support (40).

3. The connecting arrangement according to claim 2, **characterized in that** said support (40) is made in a good electrically and thermally conductive metal.

4. The connecting arrangement according to any of the preceding claims, **characterized in that** said connecting means (36) are provided with means for letting through said cryogenic fluid between said cryostat (20) and the inside (31) of said cladding (34), said connecting superconductor (32) being cooled at least in part, by contact with said cryogenic fluid.

5. The connecting arrangement according to any of the preceding claims, **characterized in that** said connecting means (36) include a connecting part (50) connected to the end (46) of said connecting superconductor (32) on the one hand, and to said screen (16) on the other end.

6. The connecting arrangement according to claim 5, **characterized in that** said connecting part (50) is connected to said screen (16) via a flexible connection (54).

7. The connecting arrangement according to claim 6, **characterized in that** said flexible connection is achieved by a set of metal braids (54).

8. The connecting arrangement according to claim 5, **characterized in that** said connecting part (50) is connected to said screen (16) by means of an intermediate part (60).

9. The connecting arrangement according to claim 8, **characterized in that** said intermediate part (60) is connected to said screen (16) via a sliding electric contact (64).

10. The connecting arrangement according to claim 9, **characterized in that** said sliding contact (64) consists of metal strips interposed between said connecting part (50) and said intermediate part (62).

11. The connecting arrangement according to claim 8, **characterized in that** said intermediate part (60) is attached to said connecting part (50).

12. The connecting arrangement according to any of the preceding claims, **characterized in that** said screen (16) is surrounded by a conducting junction element (18), said screen (16) and said junction element (18) being electrically connected together, said screen being connected to said connecting means (36) via said junction element (18).

13. The connecting arrangement according to claims 8 and 12, **characterized in that** said intermediate part (60) is connected to said junction element by means of sliding contact (66).

14. The connecting arrangement according to claim 13, **characterized in that** said sliding contact (66) consists of metal strips interposed between said junction element and said intermediate part.

15. The connecting arrangement according to claim 12, **characterized in that** said junction element (18) is attached by brazing or welding to said connecting part (50).

16. The connecting arrangement according to any of claims 12 to 15, **characterized in that** said junction element (18) is formed by a tube, the internal wall of which is attached to the external wall of said screen.

17. The connecting arrangement according to claim 16, **characterized in that** said junction element (18) is attached to said screen (16) by welding or brazing with a low melting point alloy.

18. The connecting arrangement according to any of the preceding claims, **characterized in that** said cryogenic cladding (34) is connected to said cryostat (20) by means of a sealed connection (58).

19. The connecting arrangement according to claim 18, **characterized in that** said sealed connection (58) is a Johnston type connection.

## Patentansprüche

1. Verbindungsanordnung für die Abschirmungen (16, 26) von supraleitenden Kabeln (10,12), wobei jedes Kabel einen mittleren Supraleiter (14), einen Nichtleiter, der den mittleren Supraleiter umgibt, eine Abschirmung (16), die den Nichtleiter umgibt, und einen Kryostat (20), der die Abschirmung (16) umgibt, besitzt, wobei der Kryostat eine kryogene Flüssigkeit enthalten kann, **dadurch gekennzeichnet, dass** die Anordnung ein supraleitendes Verbindungskabel (30) zwischen den Abschirmungen besitzt, wobei das Verbindungskabel einen Verbindungs-Supraleiter (32) und einen kryogenen Kabelmantel (34) besitzt, der den Verbindungs-Supraleiter umgibt, wobei jedes (46, 48) der beiden Enden des Verbindungs-Supraleiters (32) durch elektrisch und thermisch leitende Verbindungselemente (36) mit einer (16, 26) der Abschirmungen verbunden ist.

2. Verbindungsanordnung nach Anspruch 1, **dadurch gekennzeichnet, dass** der Verbindungs-Supraleiter (32) eine elektrisch und thermisch leitende Halterung (40) besitzt, die mit supraleitenden Adern (42, 44) umwickelt sind, und dass die Verbindungselemente (36) mit der kryogenen Flüssigkeit in thermischem Kontakt stehen und thermisch und elektrisch mit der Halterung (40) verbunden sind, wobei die supraleitenden Adern (42, 44) entlang den Verbindungselementen (36) und der Halterung (40) durch thermische Übertragung abgekühlt werden.

3. Verbindungsanordnung nach Anspruch 2, **dadurch gekennzeichnet, dass** die Halterung (40) aus einem elektrisch und thermisch gut leitenden Metall hergestellt wurde.

4. Verbindungsanordnung nach einem der vorhergehenden Ansprüche, **dadurch gekennzeichnet, dass** die Verbindungselemente (36) mit Vorrichtungen ausgestattet sind, in denen die kryogene Flüssigkeit zwischen dem Kryostat (20) und dem Inneren (31) des Kabelmantels (34) fließt, wobei der Verbindungs-Supraleiter (32) zumindest teilweise durch Berührung mit der kryogenen Flüssigkeit abgekühlt wird.

5. Verbindungsanordnung nach einem der vorhergehenden Ansprüche, **dadurch gekennzeichnet, dass** die Verbindungselemente (36) ein Verbindungsteil (50) besitzen, das einerseits mit dem Ende (46) des Verbindungs-Supraleiters (32) und andererseits mit der Abschirmung (16) verbunden ist.

6. Verbindungsanordnung nach Anspruch 5, **dadurch gekennzeichnet, dass** das Verbindungsteil (50) mit Hilfe einer elastischen Verbindung (54) mit der Abschirmung (16) verbunden ist.

7. Verbindungsanordnung nach Anspruch 6, **dadurch gekennzeichnet, dass** die elastische Verbindung durch ein Metallgeflecht (54) hergestellt wird.

8. Verbindungsanordnung nach Anspruch 5, **dadurch gekennzeichnet, dass** das Verbindungsteil (50) mit Hilfe eines Zwischenstückes (60) mit der Abschirmung verbunden ist.

9. Verbindungsanordnung nach Anspruch 8, **dadurch gekennzeichnet, dass** das Zwischenstück (60) mit Hilfe eines elektrischen Gleitkontaktes (64) mit der Abschirmung (16) verbunden ist.

10. Verbindungsanordnung nach Anspruch 9, **dadurch gekennzeichnet, dass** der Gleitkontakt (64) aus Metalllamellen besteht, die zwischen das Verbindungsteil (50) und das Zwischenstück (62) eingeschoben wurden.

11. Verbindungsanordnung nach Anspruch 8, **dadurch gekennzeichnet, dass** das Zwischenstück (60) an dem Verbindungsteil (50) befestigt wird.

12. Verbindungsanordnung nach einem der vorhergehenden Ansprüche, **dadurch gekennzeichnet, dass** die Abschirmung (16) von einem Verbindungsleiter (18) umgeben ist, wobei die Abschirmung (16) und das Verbindungselement (18) elektrisch miteinander verbunden sind, und die Abschirmung mit Hilfe des Verbindungselementes (18) mit den Verbindungseinrichtungen (36) verbunden ist.

13. Verbindungsanordnung nach Anspruch 8 und 12, **dadurch gekennzeichnet, dass** das Zwischenstück (60) mit Hilfe eines Gleitkontaktes (66) mit dem Verbindungselement verbunden ist.

14. Verbindungsanordnung nach Anspruch 13, **dadurch gekennzeichnet, dass** der Gleitkontakt (66) aus Metalllamellen besteht, die zwischen das Verbindungselement und das Zwischenstück eingeschoben werden.

15. Verbindungsanordnung nach Anspruch 12, **dadurch gekennzeichnet, dass** das Verbindungselement (18) durch Löten oder Schweißen an dem Verbindungsteil (50) befestigt wird.

16. Verbindungsanordnung nach einem der Ansprüche 12 bis 15, **dadurch gekennzeichnet, dass** das Verbindungselement (18) aus einem Rohr besteht, dessen Innenwand an der Außenwand der Abschirmung befestigt wird.

17. Verbindungsanordnung nach Anspruch 16, **dadurch gekennzeichnet, dass** das Verbindungselement (18) mit Hilfe einer Legierung mit niedriger Schmelztemperaur durch Schweißen oder Löten an der Abschirmung (16) befestigt wird.

18. Verbindungsanordnung nach einem der vorhergehenden Ansprüche, **dadurch gekennzeichnet, dass** der kryogene Kabelmantel (34) mit Hilfe einer dichten Rohrverbindung (58) mit dem Kryostat (20) verbunden ist.

19. Verbindungsanordnung nach Anspruch 18, **dadurch gekennzeichnet, dass** es sich bei der dichten Rohrverbindung (58) um eine "Johnston"-Verbindung handelt.
